# EUROPEAN PATENT SPECIFICATION

(11) **EP 4 526 007 B1**
(45) Date of publication and mention of the grant of the patent: **06.05.2026**
(21) Application number: 23732192.2
(22) Date of filing: 19.05.2023
(51) Int. Cl.: B01D 1/28, B01D 3/00, B01D 3/10, B01D 19/00, C02F 1/04, C02F 1/06

(54) **VACUUM EVAPORATION UNIT**
VAKUUMVERDAMPFUNGSEINHEIT
UNITÉ D'ÉVAPORATION SOUS VIDE

(30) Priority: 20.05.2022 IT 202200010538
(43) Date of publication of application: 26.03.2025
(73) Proprietor: VITALE, Francesco, 36040 Grumolo Delle Abbadesse (VI) (IT); Longo, Vincenzo, 30026 Portogruaro (VE) (IT)
(72) Inventor: VITALE, Francesco, 36040 Grumolo Delle Abbadesse (VI) (IT); Longo, Vincenzo, 30026 Portogruaro (VE) (IT)
(74) Representative: Marchioro, Paolo
(86) International application number: PCT/IB2023/055181
(87) International publication number: WO 2023/223280

(56) References cited:
- WO-A1-2010/070716
- US-A1- 2018 305 221

## Description

The invention concerns a vacuum evaporation unit.

So-called 'vacuum evaporators' are nowadays well-known and widespread in the disposal of polluting liquid waste. Document US 2018/305221 A1 gives an example of a vacuum evaporator.

Vacuum evaporators are used for concentrating aqueous solutions containing pollutants by evaporating water at low temperature.

By treating a wastewater to be disposed of with a vacuum evaporator, the volume of wastewater to be disposed of is significantly reduced, allowing the recovered distilled water to be reused and returned to the source users.

In general, vacuum evaporators make it possible to totally recycle the water used in production processes, leading to a drastic reduction in the amount of wastewater to be sent for disposal, reducing disposal costs and saving on water supply.

In some cases, such as wastewater from galvanic bath washes and recoveries, it is possible to reuse the concentrated recovery solution in the treatment baths.

The distillates obtained by vacuum evaporation are often polluted by so-called 'low-boiling' species, which remain in the vapour and cause the quality of the distillate itself to deteriorate, making its use or discharge into the sewage system problematic, resulting in the need for chemical-physical or biological post-treatments that are often costly in terms of both investment and operating costs.

The evaporator is a machine with mechanical vapour compression.

For example, a vacuum evaporator may comprise an evaporation bowl, i.e. a tank, configured to contain a solution in the liquid state to be treated at a certain temperature and at a predefined pressure to lower its evaporation temperature.

The liquid solution to be treated and the vapour of the same solution separate in the evaporation bowl and cross in a heat exchanger, thanks to the forced circulation imposed by corresponding pumping and compression means.

The liquid which evaporates, which is the substance to be filtered and cleaned, is found in the evaporation bowl.

The vapour from this liquid solution is sucked in via a circulation pump and pushed towards a heat exchanger, e.g. a shell-and-tube heat exchanger.

The liquid solution is circulated inside the tubes of the heat exchanger, pushed by a circulation pump that draws it from the bottom of the evaporation bowl. The outside of the heat exchanger tubes are lapped by vapour from the liquid solution, sucked in by a compressor, which pushes it into the heat exchange chamber where the heat exchanger is located.

The liquid solution passes through the heat exchanger and heats up, exiting the heat exchanger back into the evaporation bowl in the form of a superheated liquid.

Upon entering the evaporation bowl, the superheated liquid solution releases vapour again, thus generating a so-called 'flash' evaporation, i.e. a partial evaporation of the liquid solution.

In the heat exchange chamber, the vapour condenses outside the heat exchanger and releases energy to the solution circulating inside the heat exchanger.

The condensate, or distillate, formed outside the heat exchanger collects at the bottom of the heat exchange chamber and is extracted from there, e.g. with a vacuum pump.

The condensate, or distillate, is made available to the source users from which the liquid solution originated.

Thanks to such a vacuum evaporator, for example, 100 cubic metres of a solution of an oily emulsion, e.g. a water-based release emulsion, are reduced by a factor of 10, i.e. they are reduced to 10 cubic metres, and the recovered distilled water is reused to prepare other release agents.

As mentioned above, the wastewater to be treated may contain pollutants, such as nitrogen in the form of ammoniacal nitrogen.

These low-boiling species distil, i.e. evaporate, together with the vapour formed in the evaporator.

As mentioned, low-boiling species are gases that move together with vapour and are then found in the condensate of the same vapour.

Low-boiling species are water-soluble gases.

The species that are insoluble in water on the other hand, such as CO₂, or Nitrogen, are degassed in the vacuum pump and are called 'non-condensables' in technical jargon.

These known vacuum evaporators, although widespread and popular today, are all faced with the major problem of managing the low-boiling species.

The task of the present invention is that of developing a vacuum evaporation unit able to overcome the mentioned drawbacks and limits of the prior art.

In particular, an aim of the invention is to develop a vacuum evaporation unit capable of breaking down low-boiling pollutants from the vapour phase. Another aim of the invention is to develop a vacuum evaporation unit capable of recovering low-boiling species so that they are reusable.

A further aim of the invention is to develop a vacuum evaporation unit that can incorporate any vacuum evaporator of the already existing type.

The task as well as the aforementioned objects are achieved by a vacuum evaporation unit according to claim 1.

Further characteristics of the evaporation unit according to claim 1 are described in the dependent claims.

The aforesaid task and objects, together with the advantages that will be mentioned hereinafter, are indicated by the description of an embodiment of the invention, which is given by way of non-limiting example with reference to the attached drawings, where:

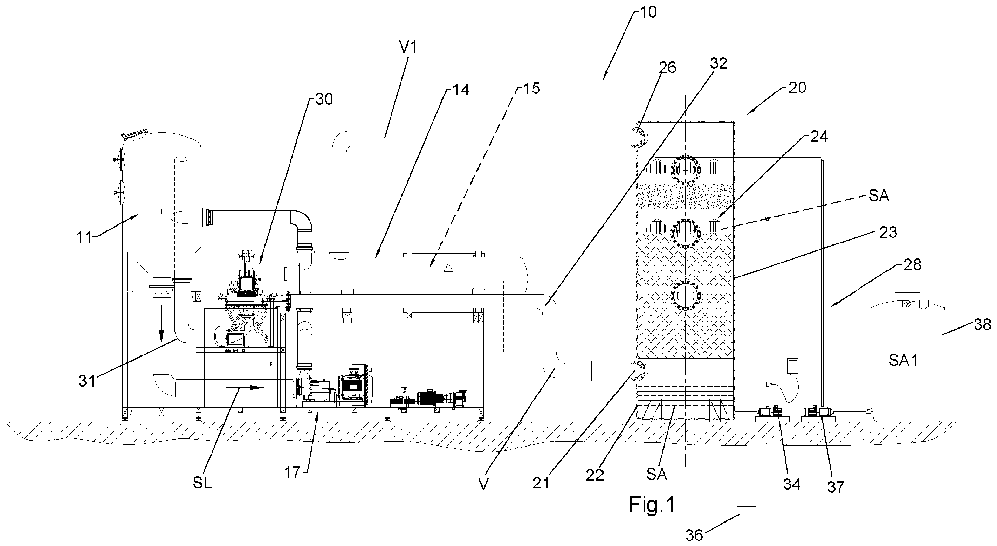

- figure 1 represents a schematic side view of a vacuum evaporation unit according to the invention;

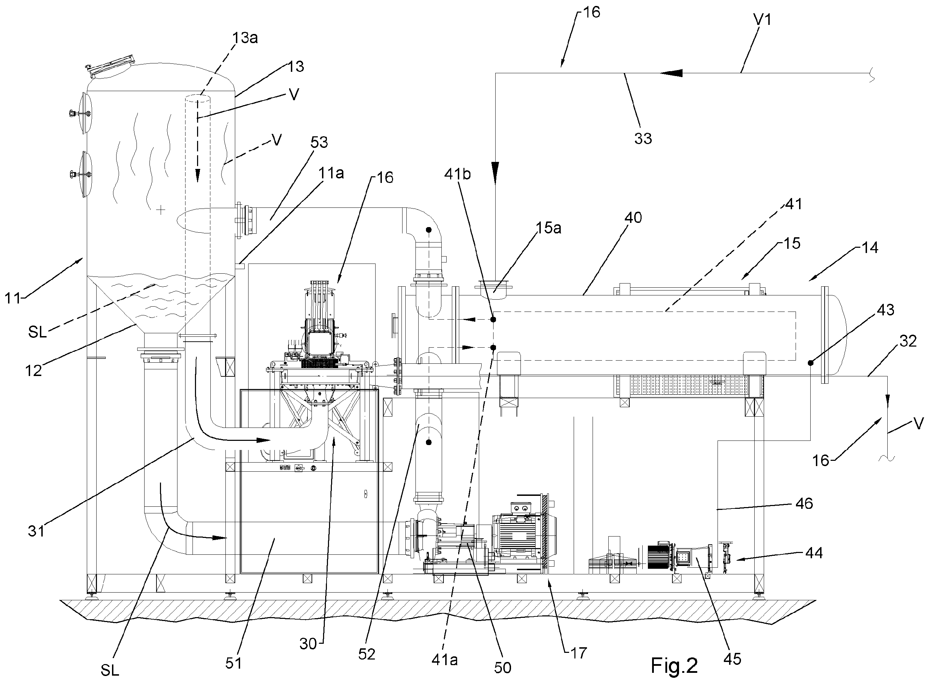

- figure 2 represents a first part of the evaporation unit according to the invention;

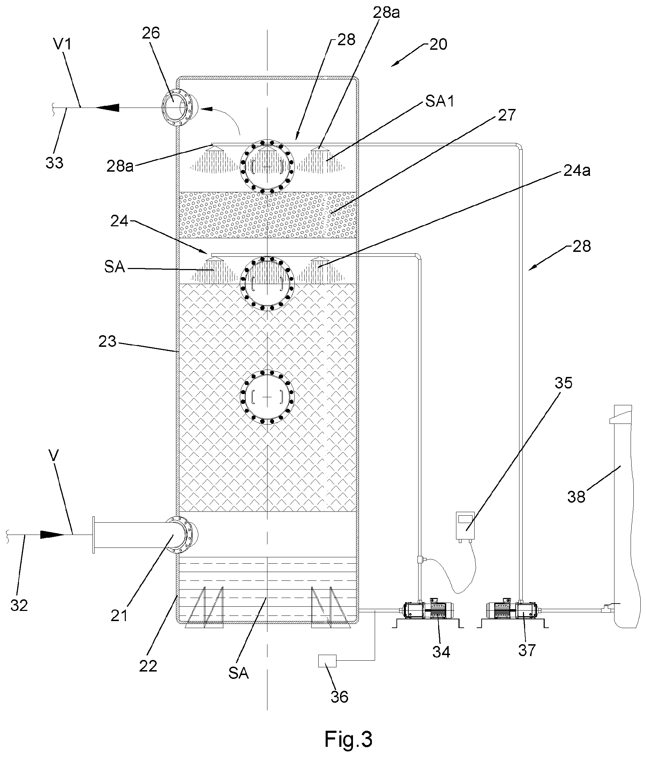

- figure 3 represents a second part of the evaporation unit according to the invention;

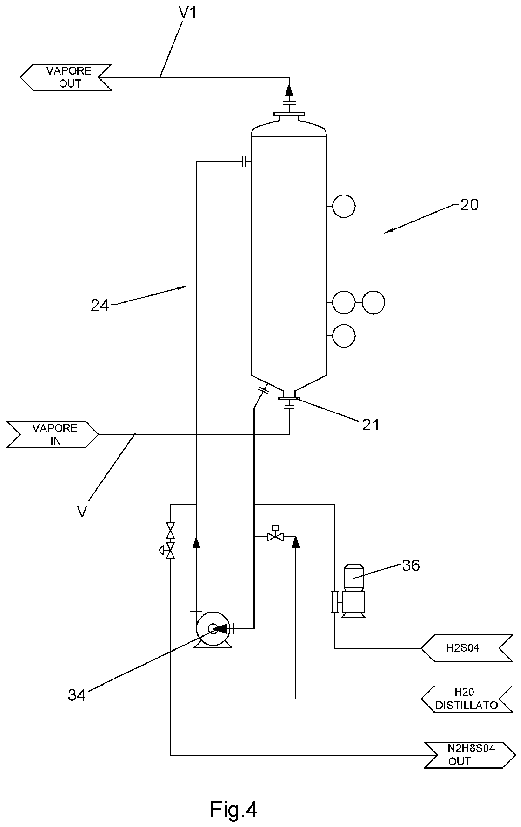

- figure 4 represents a diagram of the second part of the evaporation unit according to the invention;
- figure 5 represents an embodiment of an evaporation unit according to the invention.

With reference to the cited figures, a vacuum evaporation unit according to the invention is indicated as a whole by number **10.**

This vacuum evaporation unit **10** includes:
- a vacuum chamber **11** for the containment of a liquid solution **SL** to be treated; this vacuum chamber **11,** which in industry jargon is also known as an 'evaporation bowl', comprises in turn a lower part **12** for collecting the liquid solution and an upper part **13** for a rising vapour **V** developing from the liquid solution **SL;**
- heat exchange means **15** configured to determine heat exchange between the vapour **V** of the liquid solution **SL** and the liquid solution **SL** itself;
- a condensation chamber **14** communicating with the heat exchange means **15** and in which the condensation of the vapour **V** occurs as a result of heat exchange with the liquid solution **SL;**
- first transfer means **16** configured to conduct the vapour **V** from said upper part **13** of said vacuum chamber **11** towards said heat exchange means **15.**

The vacuum chamber **11** and the heat exchange means **15,** as will be described in detail below for the two embodiments of the invention, are operatively communicating with each other so that the liquid solution **SL** present in the lower part **12** of the vacuum chamber **11** is placed in contact with the aforesaid heat exchange means **15** so as to implement such heat exchange between the vapour **V** of the liquid solution **SL** and the liquid solution **SL** itself, and furthermore the vacuum chamber **11** and the heat exchange means **15** are operatively communicating with each other so that, following said heat exchange, the liquid solution **SL,** which has undergone this heat exchange, is present in the aforesaid lower part **12.**

The peculiarity of the vacuum evaporation unit **10** according to the invention lies in the fact that it comprises a washing tower **20** belonging to said first transfer means **16** and configured for countercurrent treatment of the vapour **V** exiting the vacuum chamber **11** with a liquid absorption solution **SA.**

In the embodiment of the vacuum evaporation unit **10** according to the invention, described herein by way of non-limiting example of the invention itself, the washing tower **20** comprises:
- an inlet port **21** for the vapour **V** exiting from said upper part **13** of said vacuum chamber **11;**
- a settling basin **22** for the collection and settling of a liquid absorption solution **SA;**
- an exchange column **23** configured to operate a countercurrent exchange of matter between said vapour **V,** ascending, and said liquid absorption solution **SA,** descending; the exchange column **23** is located above the settling basin **22;**
- dispensing means **24** configured to dispense the liquid absorption solution **SA** diffusely above the exchange column **23;**
- an outlet port **26** for said vapour **V** coming out of said washing tower **20.**

The vapour **V** leaving the washing tower **20** is intended to be a 'washed' i.e. treated, vapour and is referred to for convenience as **V1** to distinguish it from the untreated vapour **V,** which enters the washing tower **20.**

The washing tower **20** is connected at the inlet with the upper part **13** of the vacuum chamber **11,** and at the outlet with the heat exchange means **15.**

The inlet port **21** is connected to said upper part **13** of said vacuum chamber **11** by means of extraction and compression means **30,** belonging to said first transfer means **16.**

For example, the extraction and compression means **30** comprise a centrifugal compressor, which draws in untreated vapour **V** from the upper part **13** and pushes it to the inlet port **21** of the washing tower **20.**

The first transfer means **16** thus include:
- the extraction and compression means **30;**
- a first conduit **31** for the untreated vapour **V,** configured to connect a vapour outlet port **13a** with a suction port of the extraction and compression means **30;**
- a second conduit **32** for the untreated vapour **V,** configured to connect the delivery port of the extraction and compression means **30** with the inlet port **21** of the washing tower **20;**
- the washing tower **20;**
- a third conduit **33** for the treated vapour **V1,** configured to connect the outlet port **26** of the washing tower **20** with an inlet port **15a** of the heat exchange means **15,** the latter being described in more detail below.

Specifically, in the present embodiment example, the washing tower **20** includes a droplet separator **27** placed above said dispensing means **24.**

The droplet separator **27** is also known in the industry as a 'demister'.

The dispensing means **24** comprise, in the present embodiment example, a set of blowers **24a.**

The dispensing means **24** comprise a recirculation pump **34** configured to suck the absorption solution **SA** from the settling basin **22** and push it to the blowers **24a.**

For example, if the vapour **V** entering the washing tower **20** contains a pollutant including ammonium ions, the absorption solution **SA** is sulphuric acid.

Such an absorption solution **SA,** sprayed by the blowers **24a** onto the vapour **V** containing ammonium ions, reacts with the latter and returns to the below settling basin **22** in the form of a solution containing ammonium sulphate; the ammonium sulphate can usefully be used as a fertiliser.

The dispensing means **24** also comprise a pH meter **35,** configured and positioned to detect the degree of acidity of the absorption solution **SA,** which is taken from the settling basin **22** to be sent to the blowers **24a.**

The dispensing means **24** also comprise a top-up pump **36** configured to inject into the absorption solution **SA** substances useful for re-establishing the established pH level; for example, the top-up pump **36** pumps sulphuric acid into the washing tower **20,** which is useful for reacting with the ammonium ions present in the vapour V entering the washing tower **20.**

The washing tower **20** may also comprise auxiliary dispensing means **28** configured to dispense a liquid washing and replenishing solution **SA1** diffusely above said droplet separator **27.**

The auxiliary dispensing means **28** comprise, in the present embodiment example, a series of blowers **28a.**

The auxiliary dispensing means **28** comprise a tank **38** for the liquid washing and replenishing solution **SA1** and an auxiliary recirculation pump **37** configured to suck the liquid washing and replenishing solution **SA1** from the tank **38** and push it to the blowers **28a.**

The exchange column **23** is a filler-type column.

This exchange column **23** is filled with Raschig rings or other similar annular elements.

Raschig rings are cylinders made of ceramic, metal or plastic and are used to increase the surface area available for chemical reactions. They are typically shaped like hollow cylinders, with a diameter equal to the length of the cylinder.

The set of Raschig rings placed in the exchange column **23** thus results in an increase in the surface area available for chemical reactions between the vapour **V** ascending and the absorption solution **SA** dispensed by the dispensing means **24** and possibly between the vapour **V** and the liquid washing and replenishing solution **SA1** dispensed by the auxiliary dispensing means **28,** if present.

The washing tower **20** comprises a containment tank inside which the settling basin **22,** the exchange column **23,** the blowers **24a** of the dispensing means **24,** the droplet separator **27** and the blowers **28a** of the auxiliary dispensing means **28** are defined.

In the present non-limiting embodiment of the invention, the vacuum evaporation unit **10** comprises second transfer means **17** configured to conduct said liquid solution **SL** from said lower part **12** of said vacuum chamber **11** to said heat exchange means **15.**

In the embodiment of the invention described herein by way of non-limiting example of the invention itself, the heat exchange means **15** comprise a tank **40** inside which a heat exchanger **41** is arranged. The condensing chamber **14** is defined inside the tank **40** around the aforementioned heat exchanger **41.** The heat exchanger **41** is connected at the inlet with the second transfer means **17,** and at the outlet with the upper part **13** of said vacuum chamber **11.** In particular, the heat exchanger **41** is connected to an intermediate zone of the vacuum chamber **11,** above the liquid solution **SL** and below the vapour outlet port **13a,** via an outlet conduit **53.**

The tank **40** comprises an inlet port, coinciding with the aforementioned inlet port **15a** of the heat exchanger means **15,** connected to said outlet port **26** of said washing tower **20,** and at least one outlet port **43** connected to discharge means **44** configured to extract condensate from the bottom of said tank **40.** The discharge means **44** may comprise, for example, a vacuum pump **45** connected to the discharge port **43** via a discharge pipe **46.**

The second transfer means **17** comprise, by way of example, a circulation pump **50** connected to the bottom of the vacuum chamber **11** via a loading conduit **51** and connected to an inlet port **41a** of the heat exchanger **41** via a delivery conduit **52.**

The vacuum chamber **11** is to be understood to be connected with vacuum generation means, which are of a type known in themselves and not represented for simplicity's sake.

The liquid solution **SL** enters the heat exchanger **41** from the inlet port **41a** at a certain temperature, and exits the heat exchanger **41,** at a higher temperature, from an outlet port **41b** which is connected via the outlet conduit **53** to the intermediate zone of the vacuum chamber **11.**

The liquid solution **SL** is heated in the heat exchanger **41** and returns to the vacuum chamber **11** at a temperature such that the low pressure in the vacuum chamber **11** causes flash evaporation, i.e. partial evaporation.

The vapour **V** rises towards the mouth **13a** while the liquid part falls back towards the lower part **12** where the liquid solution **SL** is collected.

The vacuum chamber **11,** also known as an 'evaporation bowl', comprises a tank configured to contain a solution in the liquid state **SL** to be treated at a certain temperature and at a predefined pressure, the pressure of which is such that its evaporation temperature is lowered.

The liquid solution **SL** to be treated and the vapour **V** of the same solution separate in the evaporation bowl and cross in the tank **40** through the heat exchanger **41,** thanks to the first transfer means **16,** which suck in and compress the vapour **V,** and to the forced circulation imposed by the second transfer means **17,** which pump the liquid solution **SL** into the heat exchanger **41.**

The heat exchanger **41** is, for example, of the shell-and-tube type, but it may be of another type depending on specific technical requirements.

The liquid solution **SL** is maintained at a pre-determined level in the vacuum chamber **11** by means of a level sensor **11a** placed in the vacuum chamber **11** and by means of a top-up line, not illustrated, which feeds new liquid solution **SL** to be treated from an external tank into the loading conduit **51.**

The liquid that evaporates is the vapour **V** which must be filtered and cleaned. From the upper part **13** of the vacuum chamber **11,** vapour **V** is sucked in by the extraction and compression means **30** and pushed towards the washing tower **20.**

For example, if the liquid solution is at 60°C in the lower part **12** of the vacuum chamber **11,** the same liquid solution is heated to 70°C inside the heat exchanger **41,** and when it returns to the vacuum chamber **11** this superheated liquid solution returns to 60°C, releasing vapour **V.**

The vapour **V** is sucked in by the compressor, which compresses it and sends it to the washing tower **20** and from there back to the heat exchange means **15,** i.e. inside the tank **40** so that it touches the outer surfaces of the heat exchanger **41.**

The treated vapour **V1** exiting the washing tower **20** condenses in the tank **40** and releases energy to the liquid solution **SL** circulating inside the heat exchanger **41.**

The condensate, or distillate, i.e. the vapour that condenses in the tank **40,** is extracted with a vacuum pump, and is collected for re-supply to the users. The second transfer means **17** may include an auxiliary heater, not illustrated for simplicity purposes, placed at the delivery line **52,** to heat the liquid solution **SL** before it enters the heat exchange means **15.**

Such an auxiliary heater consists, for example, of an electrical resistance device, configured to surround the delivery conduit **52.**

When the condensate, or 'distillate', is discharged from the tank **40,** it is at a temperature of approximately 60°C; for this reason, the discharge means **44** may comprise a recovery exchanger that crosses the liquid solution entering the vacuum evaporation unit **10;** the incoming liquid solution **SL** heats up, while the condensate cools down.

Waste liquid solutions that are treated with a unit **10** according to the invention can be, for example and not exclusively, solutions of an oily emulsion, or solutions of water-based release agents, which may contain pollutants such as nitrogen in the form of ammoniacal nitrogen.

Inside the vacuum chamber **11** there is a pressure of approximately -0.8 bar. All the low-boiling species distil, i.e. evaporate, together with the vapour formed in the evaporator.

As mentioned above, low-boiling species are gases that leave together with the vapour and are then found in the vapour condensate. They are therefore water-soluble gases.

Substances known to be 'insoluble' in water, e.g. CO₂, or Nitrogen, are separated in the vacuum pump **45** of the discharge means **44** with which condensates are extracted from the tank **40,** and are also referred to as 'non-condensables'.

The vacuum pump **45** has a tank that is called a 'non-condensable separator'; these gases that do not condense are released into the atmosphere, while soluble gases, such as the ammonium ion, or other low-boiling species, would re-condense in the condensate if they were not removed in the washing tower **20.**

The vapours often contain low-boiling pollutants that go into the distillate. Thanks to the washing tower **20,** the vacuum evaporation unit **10** removes pollutants from the distillate so that the distillate can be used by the customer. Thanks to the washing tower **20,** and the specific absorption solution **SA** that is used, which is specific to the type of pollutant to be removed from the vapour **V,** the pollutant is concentrated inside the absorption solution **SA,** which becomes a substance that can have a practical application.

If, for example, the pollutant in the vapour **V** is the ammonium ion, then the absorption solution **SA** is an acid solution, e.g. sulphuric acid for the ammonium ion.

In this example, the final absorption solution, which collects in the settling basin **22,** contains 30% ammonium sulphate and can be certified as a fertiliser. This washing tower **20** works in a closed circuit and does not wash air, but washes vapour **V.**

The blowers **24a** and **28a** are atomisers/sprayers that spray the absorption solution **SA,** which then goes into enrichment and becomes enriched with the pollutant; in the above example, the solution **SA,** consisting of sulphuric acid as a starting point, is combined with the ammonium ion and becomes ammonium sulphate.

The ammonium sulphate falls back and is neutral, so to keep the pH of the absorption solution constant, new sulphuric acid is introduced into the absorption solution **SA** itself via the top-up pump **36,** so that the absorption solution **SA** can always absorb the ammonium ion that arrives with the new vapour.

The treated vapour **V1** is distilled without pollutant inside, or at least purified of 90% of the pollutant.

The settling basin **22** includes a discharge valve to evacuate the absorption solution **SA** when the same settling basin **22** is filled with neutralised solution and is no longer capable of capturing the pollutants present in the new vapour **V** entering the washing tower **20.**

The water that is exported with the evacuated absorption solution **SA** is replenished with the new solution contained in the tank **38.**

If the vapour **V** contains low-boiling solvents, the absorption solution **SA** contains solvent oils.

The vacuum evaporation unit **10** according to the invention allows the elimination of low-boiling pollutants in the vapour phase while realising the production of concentrated solutions that can be reused or directly delivered as residues, eliminating costly post-treatments.

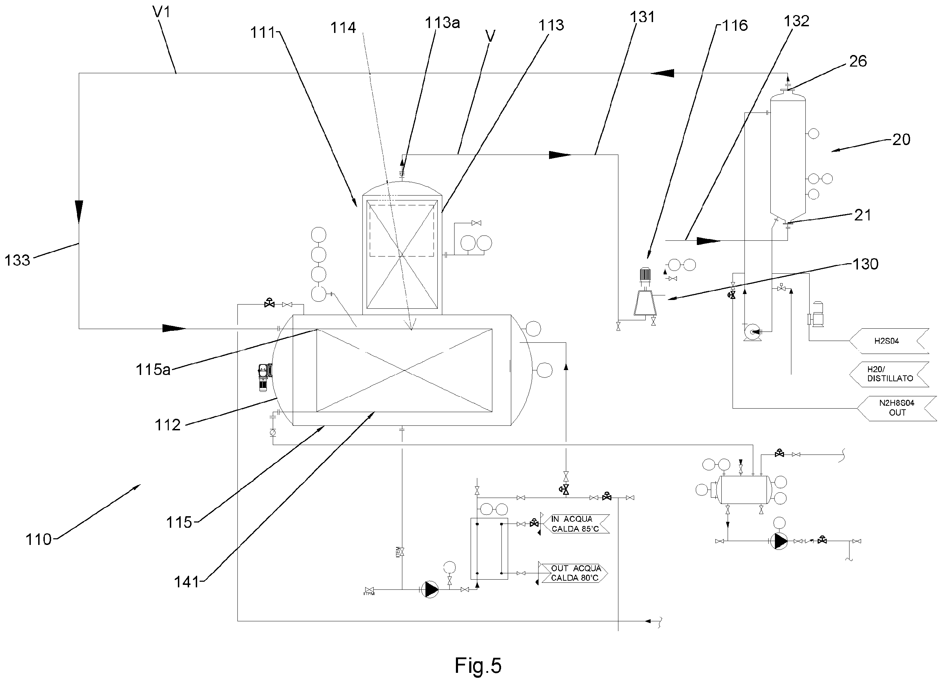

A variant embodiment of a vacuum evaporation unit according to the invention is schematically illustrated in figure 5, and is referred to therein as **110.**

This vacuum evaporation unit **110** comprises:
- a vacuum chamber **111** for the containment of a liquid solution **SL** to be treated, comprising in turn a lower part **112** for collecting the liquid solution and an upper part **113** for a rising vapour **V** developing from said liquid solution;
- a condensation chamber **114,** where the condensation of vapour generated by the boiling of said liquid solution takes place;
- heat exchange means **115** configured to bring about a heat exchange between said vapour **V** of said liquid solution **SL** and said liquid solution **SL** itself;
- first transfer means **116** configured to conduct said vapour **V** from said upper part **113** of said vacuum chamber **111** towards said heat exchange means **115.**

In this variant embodiment, the heat exchange means **115** are located inside the lower part **112** of the same vacuum chamber **111** and the condensation chamber **114** is defined by the same heat exchange means **115.**

Specifically, a heat exchanger **141** is positioned inside the lower part **112** and is immersed in the liquid solution **SL.**

The first transfer means **116** comprise:
- the extraction and compression means **130;**
- a first conduit **131** for the untreated vapour **V,** configured to connect a vapour outlet port **113a** with a suction port of the extraction and compression means **130;**
- a second conduit **132** for the untreated vapour **V,** configured to connect the delivery port of the extraction and compression means **130** with the inlet port **21** of the washing tower **20;**
- the washing tower **20;**
- a third conduit **133** for the treated vapour **V1,** configured to connect the outlet port **26** of the washing tower **20** with an inlet port **115a** of the heat exchange means **115.**

Thus, in this variant embodiment, the treated vapour **V1** flows into the heat exchanger **141** and not outside, as in the previously described variant embodiment, and inside the same heat exchanger **141** the treated vapour **V1,** as a result of the heat exchange with the liquid solution **SL** outside and present in this lower part **112,** condenses and is then discharged externally. Thus, as mentioned above, the condensing chamber **114** is defined by the heat exchanger **141** itself.

Practically, it has been established that the invention achieves the intended task and objects.

In particular, the invention has developed a vacuum evaporation unit capable of breaking down low-boiling pollutants from the vapour phase.

In addition, the invention has developed a vacuum evaporation unit capable of recovering low-boiling species so that they are reusable.

In addition, the invention provides a vacuum evaporator unit that can incorporate any vacuum evaporator of the existing type.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example from these reference signs.

## Claims

1. Vacuum evaporation unit (10, 110) configured for the treatment of polluting liquid solutions (SL), comprising:
- a vacuum chamber (11, 111) for the containment of a polluting liquid solution (SL) to be treated, comprising in turn a lower part (12, 112) for collecting the liquid solution (SL) and an upper part (13, 113) for a rising vapour (V) developing from said liquid solution (SL);
- vacuum generation means connected to said vacuum chamber (11, 111);
- heat exchange means (15, 115) configured to bring about a heat exchange between said vapour (V) of said liquid solution (SL) and said liquid solution (SL) itself, said vacuum chamber (11, 111) and said heat exchange means (15, 115) being operatively communicating so that said liquid solution (SL) present in said lower part (12, 112) of said vacuum chamber (11, 111) is brought into contact with said heat exchange means (15, 115);
- a condensation chamber (14, 114) communicating with said heat exchange means (15, 115), in said condensation chamber (14, 114) the condensation of said vapour (V) generated by the boiling of said liquid solution (SL) occurring after said heat exchange with said liquid solution (SL);
- first transfer means (16, 116) configured to conduct said vapour (V) from said upper part (13, 113) of said vacuum chamber (11, 111) to said heat exchange means (15, 115);
- second transfer means (17) configured to conduct said liquid solution (SL) from said lower part (12) of said vacuum chamber (11) to said heat exchange means (15), said heat exchange means (15) comprising a tank (40) within which a heat exchanger (41) is arranged, said heat exchanger (41) being connected at the inlet with said second transfer means (17), and at the outlet with said upper part (13) of said vacuum chamber (11);
**characterised in that** said first transfer means (16, 116) comprise:
- a first conduit (31, 131) for said vapour (V), configured to connect a vapour outlet port (13a, 113a) defined in said upper part (13, 113) with a suction port of extraction and compression means (30, 130);
- said extraction and compression means (30, 130);
- a second conduit (32, 132) for said vapour (V), configured to connect the delivery port of said extraction and compression means (30, 130) with an inlet port (21) of a washing tower (20);
- said washing tower (20) configured for the countercurrent treatment of said vapour (V) exiting from said vacuum chamber (11, 111) with a liquid absorption solution (SA);
- a third conduit (33, 133) for the vapour (V1) treated with said washing tower (20), configured to connect an outlet port (26) of said washing tower (20) with an inlet port (15a, 115a) of said heat exchange means (15, 115), said tank (40) comprising an inlet port (42) connected to said outlet port (26) of said washing tower (20), so that said treated vapour (V1) exiting said washing tower (20) condenses in said tank (40) of said heat exchange means (15, 115) and releases energy to said liquid solution (SL) circulating inside said heat exchanger (41), and at least one discharge port (43) connected with discharge means (44) configured to extract the condensate from the bottom of said tank (40);
said washing tower (20) further comprising:
- a settling basin (22) for the collection and settling of said liquid absorption solution (SA);
- an exchange column (23) of the filling type configured to operate a countercurrent exchange of matter between said vapour (V), ascending, and said liquid absorption solution (SA), descending, said exchange column (23) being placed above said settling basin (22);
- dispensing means (24) configured to dispense said liquid absorption solution (SA) diffusely above said exchange column (23).

2. Vacuum evaporation unit according to claim 1, **characterised in that** said washing tower (20) comprises a droplet separator (27) placed above said dispensing means (24).

3. Vacuum evaporation unit according to claim 2, **characterised in that** said washing tower (20) comprises auxiliary dispensing means (28) configured to dispense a liquid washing and replenishing solution (SA1) diffusely above said droplet separator (27).

4. Vacuum evaporation unit according to the preceding claim, **characterised in that** said exchange column (23) is filled with Raschig rings or other similar annular elements.

5. Vacuum evaporation unit according to any one of the preceding claims, **characterised in that** said heat exchanger (41) is connected to an intermediate zone of said vacuum chamber (11), above said liquid solution (SL) and below said vapour outlet port (13a), by means of an outlet conduit (53).

6. Vacuum evaporation unit according to any one of the preceding claims, **characterised in that** said discharge means (44) comprise a vacuum pump (45) connected to said discharge port (43) by means of a discharge conduit (46).

7. Vacuum evaporation unit according to any one of the preceding claims, **characterised in that** said transfer means (17) comprise a circulation pump (50) connected to the bottom of said vacuum chamber (11) by means of a loading conduit (51) and connected to an inlet port (41a) of said heat exchanger (41) by means of a delivery conduit (52).

8. Vacuum evaporation unit according to any one of the preceding claims, **characterised in that** said dispensing means (24) comprise a top-up pump (36) configured to introduce into said absorption solution (SA) substances useful for re-establishing the established pH level.

## Patentansprüche

1. Vakuumverdampfungseinheit (10, 110), die für die Behandlung von verschmutzenden flüssigen Lösungen (SL) konfiguriert ist, umfassend:
- eine Vakuumkammer (11, 111) zur Aufnahme einer zu behandelnden verschmutzenden flüssigen Lösung (SL), die wiederum einen unteren Teil (12, 112) zum Sammeln der flüssigen Lösung (SL) und einen oberen Teil (13, 113) für einen aufsteigenden Dampf (V), der sich aus der besagten flüssigen Lösung (SL) entwickelt, umfasst;
- Vakuumerzeugungsmittel, die mit der besagten Vakuumkammer (11, 111) verbunden sind;
- Wärmeaustauschmittel (15, 115), die konfiguriert sind, um einen Wärmeaustausch zwischen dem besagten Dampf (V) der besagten flüssigen Lösung (SL) und der besagten flüssigen Lösung (SL) selbst zu bewirken, wobei die besagte Vakuumkammer (11, 111) und die besagten Wärmeaustauschmittel (15, 115) in Wirkverbindung kommunizieren, sodass die im besagten unteren Teil (12, 112) der besagten Vakuumkammer (11, 111) vorhandene besagte flüssige Lösung (SL) mit den besagten Wärmeaustauschmitteln (15, 115) in Kontakt gebracht wird;
- eine Kondensationskammer (14, 114), die mit den besagten Wärmeaustauschmitteln (15, 115) kommuniziert, wobei in der besagten Kondensationskammer (14, 114) die Kondensation des besagten Dampfes (V), der durch das Sieden der besagten flüssigen Lösung (SL) erzeugt wird, nach dem besagten Wärmeaustausch mit der besagten flüssigen Lösung (SL) erfolgt;
- erste Transfermittel (16, 116), die konfiguriert sind, um den besagten Dampf (V) vom besagten oberen Teil (13, 113) der besagten Vakuumkammer (11, 111) zu den besagten Wärmeaustauschmitteln (15, 115) zu leiten;
- zweite Transfermittel (17), die konfiguriert sind, um die besagte flüssige Lösung (SL) vom besagten unteren Teil (12) der besagten Vakuumkammer (11) zu den besagten Wärmeaustauschmitteln (15) zu leiten, wobei die besagten Wärmeaustauschmittel (15) einen Tank (40) umfassen, in dem ein Wärmetauscher (41) angeordnet ist, wobei der besagte Wärmetauscher (41) am Einlass mit den besagten zweiten Transfermitteln (17) und am Auslass mit dem besagten oberen Teil (13) der besagten Vakuumkammer (11) verbunden ist;
**dadurch gekennzeichnet, dass** die besagten ersten Transfermittel (16, 116) Folgendes umfassen:
- eine erste Leitung (31, 131) für den besagten Dampf (V), die konfiguriert ist, um eine Dampfauslassöffnung (13a, 113a), die im besagten oberen Teil (13, 113) definiert ist, mit einer Ansaugöffnung von Extraktions- und Verdichtungsmitteln (30, 130) zu verbinden;
- die besagten Extraktions- und Verdichtungsmittel (30, 130);
- eine zweite Leitung (32, 132) für den besagten Dampf (V), die konfiguriert ist, um die Förderöffnung der besagten Extraktions- und Verdichtungsmittel (30, 130) mit einer Einlassöffnung (21) eines Waschturms (20) zu verbinden;
- der besagte Waschturm (20), der für die Gegenstrombehandlung des besagten Dampfes (V), der aus der besagten Vakuumkammer (11, 111) austritt, mit einer flüssigen Absorptionslösung (SA) konfiguriert ist;
- eine dritte Leitung (33, 133) für den mit dem besagten Waschturm (20) behandelten Dampf (V1), die so konfiguriert ist, dass sie eine Auslassöffnung (26) des besagten Waschturms (20) mit einer Einlassöffnung (15a, 115a) der besagten Wärmeaustauschmittel (15, 115) verbindet, wobei der besagte Tank (40) Folgendes umfasst: eine Einlassöffnung (42), die mit der besagten Auslassöffnung (26) des besagten Waschturms (20) verbunden ist, sodass der besagte behandelte Dampf (V1), der aus dem besagten Waschturm (20) austritt, im besagten Tank (40) der besagten Wärmeaustauschmittel (15, 115) kondensiert und Energie an die besagte flüssige Lösung (SL) abgibt, die im Inneren des besagten Wärmetauschers (41) zirkuliert, und mindestens eine Ablassöffnung (43), die mit Ablassmitteln (44) verbunden ist, die konfiguriert sind, um das Kondensat aus dem Boden des besagten Tanks (40) abzuführen;
wobei der besagte Waschturm (20) ferner Folgendes umfasst:
- ein Absetzbecken (22) zur Sammlung und zum Absetzen der besagten flüssigen Absorptionslösung (SA);
- eine Austauschsäule (23) vom Fülltyp, die konfiguriert ist, um einen Gegenstrom-Stoffaustausch zwischen dem aufsteigenden besagten Dampf (V) und der absteigenden besagten flüssigen Absorptionslösung (SA) durchzuführen, wobei die besagte Austauschsäule (23) über dem besagten Absetzbecken (22) positioniert ist;
- Abgabemittel (24), die konfiguriert sind, um die besagte flüssige Absorptionslösung (SA) diffus über der besagten Austauschsäule (23) abzugeben.

2. Vakuumverdampfungseinheit nach Patentanspruch 1, **dadurch gekennzeichnet, dass** der besagte Waschturm (20) einen Tropfenabscheider (27) umfasst, der über den besagten Abgabemitteln (24) positioniert ist.

3. Vakuumverdampfungseinheit nach Patentanspruch 2, **dadurch gekennzeichnet, dass** der besagte Waschturm (20) Hilfsabgabemittel (28) umfasst, die konfiguriert sind, um eine flüssige Wasch- und Nachfülllösung (SA1) diffus über dem besagten Tropfenabscheider (27) abzugeben.

4. Vakuumverdampfungseinheit nach dem vorhergehenden Patentanspruch, **dadurch gekennzeichnet, dass** die besagte Austauschsäule (23) mit Raschig-Ringen oder anderen ähnlichen ringförmigen Elementen gefüllt ist.

5. Vakuumverdampfungseinheit nach jeglichem der vorhergehenden Patentansprüche, **dadurch gekennzeichnet, dass** der besagte Wärmetauscher (41) mit einem Zwischenbereich der besagten Vakuumkammer (11) oberhalb der besagten flüssigen Lösung (SL) und unterhalb der besagten Dampfauslassöffnung (13a) mittels einer Auslassleitung (53) verbunden ist.

6. Vakuumverdampfungseinheit nach jeglichem der vorhergehenden Patentansprüche, **dadurch gekennzeichnet, dass** die besagten Ablassmittel (44) eine Vakuumpumpe (45) umfassen, die mittels einer Ablassleitung (46) mit der besagten Ablassöffnung (43) verbunden ist.

7. Vakuumverdampfungseinheit nach jeglichem der vorhergehenden Patentansprüche, **dadurch gekennzeichnet, dass** die besagten Transfermittel (17) eine Umwälzpumpe (50) umfassen, die über eine Ladeleitung (51) mit dem Boden der besagten Vakuumkammer (11) und über eine Förderleitung (52) mit einer Einlassöffnung (41a) des besagten Wärmetauschers (41) verbunden ist.

8. Vakuumverdampfungseinheit nach jeglichem der vorhergehenden Patentansprüche, **dadurch gekennzeichnet, dass** die besagten Abgabemittel (24) eine Nachfüllpumpe (36) umfassen, die konfiguriert ist, um in die besagte Absorptionslösung (SA) Substanzen einzuführen, die dem Wiederherstellen des festgelegten pH-Werts dienen.

## Revendications

1. Unité d'évaporation sous vide (10, 110) configurée pour le traitement de solutions liquides polluantes (SL), comprenant:
- une chambre à vide (11, 111) pour le confinement d'une solution liquide polluante (SL) à traiter, comprenant à son tour une partie inférieure (12, 112) destinée à recueillir la solution liquide (SL) et une partie supérieure (13, 113) destinée à recevoir une vapeur ascendante (V) se développant à partir de ladite solution liquide (SL);
- des moyens de génération de vide reliés à ladite chambre à vide (11, 111);
- des moyens d'échange thermique (15, 115) configurés pour provoquer un échange thermique entre ladite vapeur (V) de ladite solution liquide (SL) et ladite solution liquide (SL) elle-même, ladite chambre à vide (11, 111) et lesdits moyens d'échange thermique (15, 115) communiquant de manière opérationnelle de sorte que ladite solution liquide (SL) présente dans ladite partie inférieure (12, 112) de ladite chambre à vide (11, 111) soit mise en contact avec lesdits moyens d'échange thermique (15, 115);
- une chambre de condensation (14, 114) communiquant avec lesdits moyens d'échange thermique (15, 115), dans ladite chambre de condensation (14, 114) la condensation de ladite vapeur (V) générée par l'ébullition de ladite solution liquide (SL) se produisant après ledit échange thermique avec ladite solution liquide (SL);
- des premiers moyens de transfert (16, 116) configurés pour conduire ladite vapeur (V) de ladite partie supérieure (13, 113) de ladite chambre à vide (11, 111) vers lesdits moyens d'échange thermique (15, 115);
- des deuxièmes moyens de transfert (17) configurés pour conduire ladite solution liquide (SL) de ladite partie inférieure (12) de ladite chambre à vide (11) vers lesdits moyens d'échange thermique (15), lesdits moyens d'échange thermique (15) comprenant un réservoir (40) à l'intérieur duquel est agencé un échangeur de chaleur (41), ledit échangeur de chaleur (41) étant relié à l'entrée avec lesdits deuxièmes moyens de transfert (17), et à la sortie avec ladite partie supérieure (13) de ladite chambre à vide (11);
**caractérisée en ce que** lesdits premiers moyens de transfert (16, 116) comprennent:
- un premier conduit (31, 131) pour ladite vapeur (V), configuré pour relier un orifice de sortie de vapeur (13a, 113a) défini dans ladite partie supérieure (13, 113) à un orifice d'aspiration des moyens d'extraction et de compression (30, 130);
- lesdits moyens d'extraction et de compression (30, 130);
- un deuxième conduit (32, 132) pour ladite vapeur (V), configuré pour relier l'orifice de refoulement desdits moyens d'extraction et de compression (30, 130) à un orifice d'entrée (21) d'une tour de lavage (20);
- ladite tour de lavage (20) configurée pour le traitement à contre-courant de ladite vapeur (V) sortant de ladite chambre à vide (11, 111) avec une solution d'absorption liquide (SA);
- un troisième conduit (33, 133) pour la vapeur (V1) traitée avec ladite tour de lavage (20), configuré pour relier un orifice de sortie (26) de ladite tour de lavage (20) avec un orifice d'entrée (15a, 115a) desdits moyens d'échange thermique (15, 115), ledit réservoir (40) comprenant un orifice d'entrée (42) relié audit orifice de sortie (26) de ladite tour de lavage (20), de sorte que ladite vapeur traitée (V1) sortant de ladite tour de lavage (20) se condense dans ledit réservoir (40) desdits moyens d'échange thermique (15, 115) et libère de l'énergie à ladite solution liquide (SL) circulant à l'intérieur dudit échangeur de chaleur (41), et au moins un orifice d'évacuation (43) relié à des moyens d'évacuation (44) configurés pour extraire le condensat du fond dudit réservoir (40);
ladite tour de lavage (20) comprenant en outre:
- un bassin de décantation (22) pour la collecte et la décantation de ladite solution liquide d'absorption (SA);
- une colonne d'échange (23) de type remplissage configurée pour opérer un échange de matière à contre-courant entre ladite vapeur (V), ascendante, et ladite solution liquide d'absorption (SA), descendante, ladite colonne d'échange (23) étant placée au-dessus dudit bassin de décantation (22);
- des moyens de distribution (24) configuré pour distribuer ladite solution liquide d'absorption (SA) de manière diffuse au-dessus de ladite colonne d'échange (23).

2. Unité d'évaporation sous vide selon la revendication 1, **caractérisée en ce que** ladite tour de lavage (20) comprend un séparateur de gouttelettes (27) placé au-dessus desdits moyens de distribution (24).

3. Unité d'évaporation sous vide selon la revendication 2, **caractérisée en ce que** ladite tour de lavage (20) comprend des moyens de distribution auxiliaires (28) configurés pour distribuer une solution liquide de lavage et de réapprovisionnement (SA1) de manière diffuse au-dessus dudit séparateur de gouttelettes (27).

4. Unité d'évaporation sous vide selon la revendication précédente, **caractérisée en ce que** ladite colonne d'échange (23) est remplie d'anneaux de Raschig ou d'autres éléments annulaires similaires.

5. Unité d'évaporation sous vide selon l'une quelconque des revendications précédentes, **caractérisée en ce que** ledit échangeur de chaleur (41) est relié à une zone intermédiaire de ladite chambre à vide (11), au-dessus de ladite solution liquide (SL) et au-dessous dudit orifice de sortie de vapeur (13a), au moyen d'un conduit de sortie (53).

6. Unité d'évaporation sous vide selon l'une quelconque des revendications précédentes, **caractérisée en ce que** lesdits moyens d'évacuation (44) comprennent une pompe à vide (45) reliée audit orifice d'évacuation (43) au moyen d'un conduit d'évacuation (46).

7. Unité d'évaporation sous vide selon l'une quelconque des revendications précédentes, **caractérisée en ce que** lesdits moyens de transfert (17) comprennent une pompe de circulation (50) reliée au fond de ladite chambre à vide (11) au moyen d'un conduit de chargement (51) et reliée à un orifice d'entrée (41a) dudit échangeur de chaleur (41) au moyen d'un conduit de refoulement (52).

8. Unité d'évaporation sous vide selon l'une quelconque des revendications précédentes, **caractérisée en ce que** lesdits moyens de distribution (24) comprennent une pompe de remplissage (36) configurée pour introduire dans ladite solution d'absorption (SA) des substances utiles au rétablissement du niveau de pH établi.
